# EUROPEAN PATENT APPLICATION

(11) **EP 1 793 325 A2**
(43) Date of publication of application: **06.06.2007**
(21) Application number: 07003851.8
(22) Date of filing: 10.03.1993
(51) Int. Cl.: G06K 7/00

(54) **Multi-mode identification system**

(62) Divisional of application: 93907341.7
(71) Applicant: Avid Identification Systems, Inc., Norco, CA 91760 (US)
(72) Inventor: Beigel, Michael, Corona, CA 91720 (US); Polish, Nathaniel, New York 10025 (US); Malm, Robert, Pacific Palisades, CA90272 (US)
(74) Representative: Fiener, Josef

(57) **Abstract**

A multi-mode identification system is comprised of readers and tags wherein a reader (100) in the proximity of and inductively coupled (100) to a tag (200) interrogates and obtains a response from the tag (200) in accordance with a specified process if the tag (200) belongs to a certain class of tags. The response consists of an identification code unique to the tag (200) together with the data supplied by sensors (270, 275) incorporated within the tag (200). Communication between tag (200) and reader (100) is accomplished by a reader (100) establishing a reversing magnetic field in the vicinity of a tag (200) and the tag (200) varying its absorption of power from the field in accordance with the information to be transmitted. The reader (100) detects these variations in power absorption and extracts from these variations the information transmitted by the tag (200).

## Description

This invention relates to cooperative identification systems (which had their electronic beginnings in World War II as Identification - Friend or Foe Systems) in which the identifying agency and the object to be identified cooperate in the identification process according to a prearranged scheme. More specifically, the invention relates to systems consisting generically of an interrogator-responsor (or "reader") inductively coupled to a transponder (or "tag") where the reader is associated with the identifying agency and the tag is associated with the object to be identified.

Such systems are being used or have the potential of being used for identifying fish, birds, animals, or inanimate objects such as credit cards. Some of the more interesting applications involve objects of small size which means that the transponder must be minute. In many cases it is desirable to permanently attach the tag to the object which means implantation of the device in the tissues of living things and somewhere beneath the surfaces of inanimate objects. In most cases, implantation of the tag within the object forecloses the use of conventional power sources for powering the tag. Sunlight will usually not penetrate the surface of the object. Chemical sources such as batteries wear out and cannot easily be replaced. Radioactive sources might present unacceptable risks to the object subject to identification. One approach to powering the tag that has been successfully practiced for many years is to supply the tag with power from the reader by means of an alternating magnetic field generated by the reader. This approach results in a small, highly-reliable tag of indefinite life and is currently the approach of choice.

For many applications, convenience and utility dictate that the reader be hand-portable which translates into the use of batteries to power the unit. However, the size and weight of batteries having the requisite capacity to perform the identification function at reasonable ranges without interruption challenge the very concept of hand-portability. The twin goals of ease of use and system performance have been the subject of uneasy compromise in the past. There is a need to harness the recent advances in technology to the design of energy efficient systems in order to realize the full potential of identification systems based on inductive coupling.

In order to minimize the trauma associated with implanting the tag in living creatures and also as a matter of convenience and utility, the tag should be small enough to be implanted by means of a syringe-type instrument rather than by surgery. This approach has been proved out in present-day systems and is likely to continue to be the implantation procedure of choice in the future. The size of present-day tags are reasonable insofar as the larger specimens are concerned. However, size reduction is necessary if the tags are to be used with the smaller animals, birds, and fish.

As identification systems of this type proliferate and users multiply, it becomes important to recognize this changing environment in the design of next-generation identification apparatus. Newer-model readers should be able to read older-model tags. Users' privacy and security interests must be respected - one user should not be able to read another user's tags. And finally, in this computer-driven world, it must be possible to conveniently interface readers with computers.

### BRIEF SUMMARY OF INVENTION

The multi-mode identification system is comprised of readers and tags wherein a reader in the proximity of and inductively coupled to a tag may interrogate and obtain a response from the tag in accordance with a specified process if the tag belongs to a certain class of tags. The response consists of an identification code unique to the tag together with data supplied by sensors incorporated within the tag.

The tags are comprised of capacitors, inductors, transistors, and possibly other solid-state devices packaged in forms adapted for attachment to or implantation in animate or inanimate objects. The basic configuration of a tag consists of a multi-turn coiled conductor that develops a voltage across its terminals in response to a reversing interrogating magnetic field produced by a reader and passing through the coil; a capacitor in parallel with the coil, the combination being resonant at some interrogating magnetic field frequency; an AC-to-DC converter bridged across the resonant circuit which extracts AC power from the magnetic field and delivers DC power to all of the tag circuits; a controller (or microprocessor) which controls all operations in the tag; a clock generator which utilizes the induced signal across the resonant circuit to generate all required clock signals for tag operations; a threshold detector which provides a reset signal to the controller when the AC-to-DC converter output voltage reaches a level sufficient to operate all of the tag circuitry; non-volatile memory, accessible to the controller, containing the tag identification code; sensors for measuring environmental parameters such as temperature, shock, and vibration, and in the case of living tag carriers, blood sugar level and PH factor; an A/D converter that can be selectively connected to each of the sensors for converting the analog sensor outputs to digital representations; and a resonant circuit loading means which enables the controller to place a varying load on the resonant circuit in accordance with a serial bit stream comprising the tag identification code and the environmental data.

The tag is physically comprised of a semiconductor chip incorporating the devices and circuitry of the tag including the tuning capacitor and a multi-turn coiled conductor which is attached to the semiconductor chip, the combination being sealed within a glass tube or other appropriate container.

The portable version of the reader is adapted for operation by batteries. For fixed installations the reader is adapted for operation from alternating current power sources.

A multi-turn coiled conductor in the reader provides the means for inductively coupling the reader to the coil in a tag when the two units are in proximity of one another. Capacitors are placed in series with the coil to create a circuit resonant at the same frequency as the resonant circuit in the tag to be read. Provision is made for the near-instantaneous selection of capacitance or coil inductance values so that the resonant frequency of the reader can be selected to match the resonant frequency of the tag.

The reader resonant circuit is driven at the resonant frequency by a balanced double-ended coil driver which is supplied with a periodic signal of appropriate frequency by a clock generator. The clock generator also supplies all timing signals required in the operation of the reader.

When the reader and tag are in the proximity of and inductively coupled to each other, the voltage across the reader coil is modulated in amplitude according to the loading pattern applied to the tag resonant circuit when the tag responds to an interrogation from the reader. This variation in amplitude, which is a measure of the power absorbed by the tag from the reversing magnetic field, is detected by means of an envelope detector.

The signal-to-noise ratio of the envelope detector signal is maximized by appropriate filtering and the signal is then digitized by an A/D converter. The digitized envelope detector signal is supplied to a microprocessor which extracts the data transmitted to the reader by the tag.

In order to read tags which transmit information by causing the voltage across the reader coil to vary in phase and/or frequency as well as amplitude, another embodiment of the invention is preferred. A notch filter tuned to the driving frequency of the reader coil is substituted for the envelope detector and the output signal from the notch filter is digitized and supplied to the microprocessor which extracts the data from the signal. The purpose of the notch filter is to suppress the huge driving signal that is present in the coil signal thereby reducing the dynamic range required of the A/D converter.

The microprocessor interprets the data and places it in a form suitable for display to the user. The microprocessor also supplies audio signals and/or artificial speech that are intended to inform and guide the user in his use of the reader.

The reader can be configured to operate in a variety of modes by means of hardware and firmware switches actuated by mode control data contained in a read-only memory within the reader. Among the parameters that can be controlled by mode control data are operating frequency, demodulation protocols, error control protocols, tag classes, and search sequencing among tag classes.

The tag class is a group of tags that the reader is enabled to recognize. A tag class code may identify tags of a particular design, tags from a particular manufacturer, tags utilized by particular user groups, tags utilized for the identification of particular species of objects, etc. Thus, an operating mode which specifies a single tag class may restrict the reader to recognizing responses from tags of a particular design from a certain manufacturer that are utilized by a particular user group for the identification of particular species.

The mode control data may specify more than one tag class in which case the reader is permitted to recognize an expanded population of tags. If the mode control data specifies more than one tag class, then the reader either interrogates all classes simultaneously or proceeds from one class to the next in sequence until all of the classes have been interrogated, at which point the interrogation process repeats.

In searching an object for a tag, the reader is moved over the surface of the object until either a tag response is received or the surface of the object where the tag might be located has been completely scanned. The determination by the reader that a tag belonging to an enabled class is responding occurs within a specific period of time (the detection time) after the reader begins to transmit. If the reader does not obtain a response within the detection time, the reader turns off so as to conserve battery power. The reader turns on again and performs another interrogation after a second specific period of time (the repositioning time) has elapsed. This repositioning time is long enough to permit the reader to be moved to a new location on the surface of the object. This power-on/power-off process is a very effective means for conserving battery power in the reader.

One object of the invention is to provide an identification system comprising readers and tags wherein a reader is restricted to recognizing only certain classes of tags. A second object of the invention is to provide a general-purpose reader that can produce responses from a variety of tags of different designs and that can recognize and decode the responses from these differently-designed tags. A third object of the invention is to enable the reader to read the tag message on the basis of a one-time transmission thereby permitting the reader to conserve battery power by turning itself off immediately after the one-time transmission. This object is achieved by delaying the tag response until the reader is ready to receive thereby assuring that the reader does not begin reading the data midway through the message transmission. A fourth object of the invention is to integrate the coil, capacitor, and circuitry that comprise a tag to the highest degree that the technology will allow.

### BRIEF DESCRIPTION OF DRAWINGS

FIG. 1 is a functional block diagram of the multi-mode identification system including reader and tag.
FIG. 2 is a side view of a tag designed for implantation with part of the enclosing container cut away.
FIG. 3 is a cross-sectional view of a tag designed for implantation in a plane transverse to the longitudinal axis of the tag.
FIG. 4A is the flow diagram of the 4 Times "Mark" Frequency Interrupt Routine that is performed by the microprocessor in the reader.
FIG. 4B is the flow diagram of the 4 Times "Mark" Frequency Delayed Interrupt Routine that is performed by the microprocessor in the reader.
FIG. 5A is the flow diagram of the 4 Times "Space" Frequency Interrupt Routine that is performed by the microprocessor in the reader.
FIG. 5B is the flow diagram of the 4 Times "Space" Frequency Delayed Interrupt Routine that is performed by the microprocessor in the reader.
FIG. 6A is the flow diagram of the "Mark" Frequency Interrupt Routine that is performed by the microprocessor in a first embodiment of the reader.
FIG. 6B is the flow diagram of the "Mark" Frequency Interrupt Routine that is performed by the microprocessor in a second embodiment of the reader.
FIG. 7A is the flow diagram of the "Space" Frequency Interrupt Routine that is performed by the microprocessor in a first embodiment of the reader.
FIG. 7B is the flow diagram of the "Space" Frequency Interrupt Routine that is performed by the microprocessor in a second embodiment of the reader.
FIG. 8 is the flow diagram of the Calibrate Routine that is performed by the microprocessor in the reader.
FIG. 9 is the flow diagram of the Operate Routine that is performed by the microprocessor in the reader.
FIG. 10 is the flow diagram of the Bit Rate (Data) Interrupt Routine that is performed by the microprocessor in the reader.
FIG. 11 is the flow diagram of the Message Recovery Routine that is performed by the microprocessor in the reader.
FIG. 12 is the flow diagram of the Message Processing Routine that is performed by the microprocessor in the reader.
FIG. 13 is the flow diagram of the Power-On Routine that is performed by the microprocessor in the reader.
FIG. 14 is the flow diagram of the. *T*₁ Interrupt Routine that is performed by the microprocessor in the reader.
FIG. 15 is the flow diagram of the Bit Rate (Control) Interrupt Routine that is performed by the microprocessor in the reader.
FIG. 16 is the flow diagram of the Coil-Off Interrupt Routine that is performed by the microprocessor in the reader.

### DESCRIPTION OF THE PREFERRED EMBODIMENT

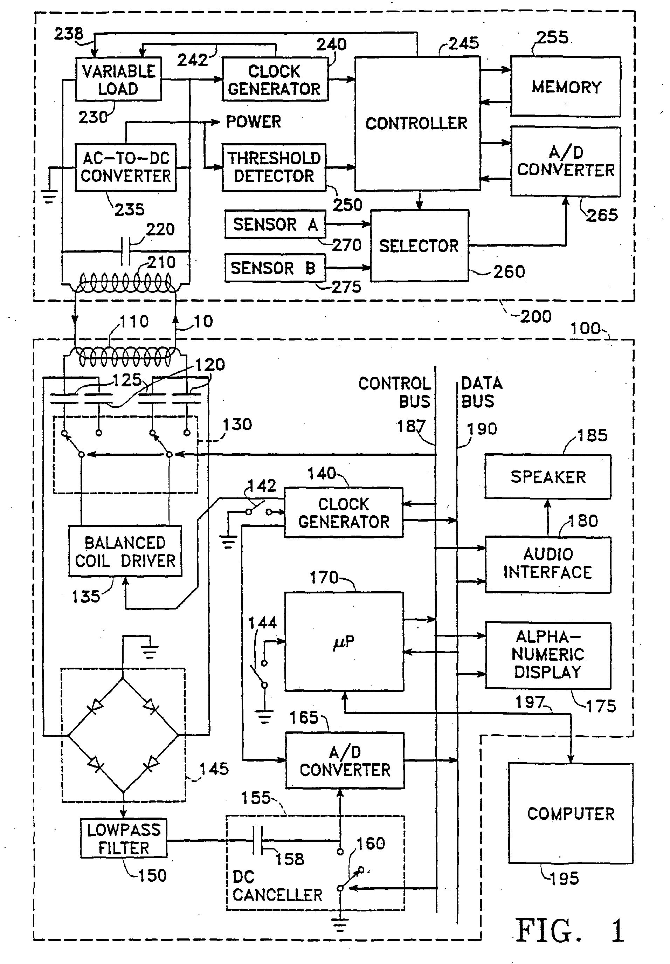

The functional block diagram for an inductively-coupled reader 100 and tag 200 are shown in Fig. 1. The reader 100 interrogates the tag 200 by generating a reversing magnetic field 10 by means of the wound wire coil 110. The coil 110 in series with either capacitor pair 120 or 125, selectable by means of SPDT switch pair 130, is driven by the double-ended balanced coil driver 135 with a periodic signal of appropriate frequency supplied by the clock generator 140. Typically, the driving frequency is in the range from 100 kHz to 400 kHz.

The clock generator 140 is comprised of a crystal-controlled oscillator and divider chains of ordinary design. The oscillator frequency is chosen such that all required driving frequencies can be obtained by integer divisions. Further integer divisions of each driving frequency provide square-wave clocking signals having the following frequencies: 4 times "mark" frequency; 4 times "space" frequency; "mark" frequency; "space" frequency; bit rate (data); and bit rate (control). The clocking signals are obtained in such a way that the low-to-high transitions of all signals except the bit rate (control) signal coincide at particular instants of time. The low-to-high transition of the bit rate (control) signal precedes that of the bit rate (data) signal by at least one cycle of the driving frequency.

The clock generator 140 includes the duty cycle timer which generates a square-wave timing signal that causes the reader coil 110 to be energized when the signal is high. The signal remains high for a time long enough to receive the information to be communicated by a tag on the particular driving frequency being used. The signal remains low for a time long enough for the reader 100 to be moved to a new reading position. The duty cycle timer produces the "coil-off" interrupt signal to the microprocessor 170 when the timing signal it generates goes low.

The purpose of operating the reader coil 110 with a duty cycle is to conserve battery power and achieve longer operating periods between battery rechargings or replacements.

The duty cycle timer is set to low by the microprocessor 170 whenever the microprocessor recognizes a condition that indicates failure of the read process.

The duty cycle timer turns on only when the reader power switch is on and the user-activated "read" trigger switch 142 is closed. Releasing the "read" trigger does not disable the duty cycle timer until the normal transition from high to low occurs.

Time T is maintained in the clock generator 140 by a counter that counts cycles of the driving frequency when the duty cycle timer signal is high. The counter is reset each time the duty cycle timer signal goes from high to low. The T counter can be accessed by the microprocessor 170 by means of the control bus 187 and data bus 190.

The T counter supplies an interrupt signal to the microprocessor 170 when T equals *T*₁ where *T*₁ is the time required for the reader coil voltage to approach within say 0.1% of its steady-state voltage. When the T₁ interrupt occurs, signal processing in the reader begins.

A typical design for balanced drivers suitable for driving the coil 110 and capacitors 120 or 125 is commercially-available integrated circuit SI995ODY which comprises a complementary pair of power metal oxide silicon field effect transistors (power MOSFETS).

The two capacitors comprising each coil pair have equal capacitances, the capacitance being chosen so that the combination of the coil and capacitor pair constitutes a series resonant circuit at a desired driving frequency.

The tag 200, when in the proximity of and inductively-coupled to the reader 100, extracts power from the alternating magnetic field 10 established by the reader coil 110 by means of the multiturn coiled conductor 210 in parallel with the capacitor 220, the combination constituting a resonant circuit at one of the reader's driving frequencies. The variable load 230 is connected across the coil-capacitor combination thereby providing a means for varying the load on the balanced coil driver 135 in the reader 100 resulting from the inductive coupling of the reader and tag coils. The variable load 230 is resistive in the preferred embodiment thereby achieving the greatest possible effectiveness in absorbing power from the reversing magnetic field and in communicating with the reader. Other less desirable embodiments could use loads that are inductive, capacitive, or some combination of inductive, capacitive, and resistive.

The communication capability of the reader 100 and the tag 200 are critically dependent on the characteristics of the reader coil 110 and the tag coil 210. The number of turns for the reader coil should be as large as possible so that the magnetic field created by the reader coil is as large as possible. On the other hand, the resistance of the reader coil 110 (proportional to the number of turns) must not become so large as to be a substantial mismatch to the driving impedance and thereby impede the transfer of power to the tag. The preferred embodiment of the reader coil is wound on an oval plastic core approximately 4-5/8 inches long by 3-3/4 inches wide. The coil is wound with 90 to 100 turns of 28-gauge wire yielding a coil with approximate inductance of 2.3 mH and approximate resistance of 7.6 ohms.

The number of turns on the tag coil 210 also should be as large as possible in order to maximize the inductively-generated voltage across the coil. Again caution must be exercised in choosing the number of turns so that the power transfer between reader and tag is not adversely affected.

The alternating voltage appearing across the coil 210 as a result of being inductively coupled to the reader coil 110 is converted to direct current by means of the AC/DC converter and voltage regulator 235 which supplies all of the power required by the tag circuitry. The alternating voltage appearing across the coil 210 provides a reference frequency for the clock generator 240 which supplies all of the clocking signals required by the tag circuitry. Another embodiment utilizes the alternating coil voltage to stabilize a voltage-controlled oscillator which would then act as the source for all clocking signals.

The controller 245 controls all of the operations performed by the tag circuitry. A clock signal for the controller 245 is supplied by the clock generator 240. The threshold detector 250 produces a signal when the voltage from the AC/DC converter and voltage regulator 235 reaches the level required for reliable operation of the tag circuitry. The signal from the threshold detector 250 serves to reset the controller which waits for a predetermined period of time (measured by a clock cycle counter in the controller) and then initiates the transmission of information to the reader. The transmission delay may also be accomplished with a simple analog timing circuit. The predetermined transmission delay is for the purpose of allowing the transient associated with the application of a voltage to the reader resonant circuit 110, 120/125 to die down to the point where power absorption by the tag can be detected by the reader. The reader is thereby able to extract information from the power absorption signal as soon as the tag begins transmitting making it unnecessary for the reader magnetic field to be energized longer than the duration of a single message transmission and to be turned off quickly if a tag cannot be detected.

The threshold detector is a simple circuit that uses a Zener diode as a reference voltage.

A message is transmitted by the controller by applying a two-level signal corresponding to a message bit pattern to the variable load 230. In the preferred embodiment, a message consists of a 10-bit synchronization code, a 24-bit tag class code, a 56-bit identification code, a 16-bit error-detecting code based on the CCITT standard 16 bit checksum, and finally a predetermined number of 8-bit sensor data words. The checksum permits up to 16 bit errors in that portion of the message consisting of the tag class code and the identification code to be detected. Each of the sensor words carries its own parity bit thereby permitting single-error detection in each of the sensor data words.

The controller retrieves for transmission all but the sensor data portion of the message from the non-volatile memory 255. In the embodiment shown in Fig. 1 the controller obtains the sensor data by causing the sensor selector 260 to connect the A/D converter 265 sequentially first to temperature sensor 270 and then to a PH sensor 275 or other desired sensor.

In the absence of a message transmission from the controller 245, the variable load 230 is dormant and does not appreciably load the resonant circuit 210, 220. When the controller transmits a message over line 238 to the variable load 230, the variable load applies a load to the resonant circuit 210, 220 in accordance with a frequency-shift-keying (FSK) technique. A message bit "1" causes a "mark" frequency signal to be selected. A "0" selects a "space" frequency signal. The selection of the "mark" frequency signal causes the load to be turned on or off depending on whether the "mark" frequency signal is high or low. Similarly, the "space" frequency signal causes the load to be turned on or off depending on the high and low states of the "space" frequency signal. The "mark" and "space" frequency square-wave signals are derived from the reader driving frequency and supplied by the clock generator 240 to the variable load 230 over lines 242.

Since the "mark" and "space" frequencies are phase-coherent with the magnetic field driving frequency, the reader may advantageously extract the information from the power absorption signal by means of a coherent demodulation technique thereby realizing the increased communication efficiency of coherent frequency-shift keying (CFSK) as compared to non-coherent frequency-shift keying (NCFSK).

The "mark" and "space" frequencies are chosen small enough that the sidebands resulting from the amplitude modulation of the driving-frequency signal are not attenuated by more than say 3 dB with respect to the driving frequency by the reader resonant circuit 110, 120/125. The spacing of the "mark" and "space" frequencies should ideally be an integer times the bit rate where the integer is preferably equal to or greater than two. For a driving frequency of 400 kHz and a bit rate of 5 kHz, typical values for the "mark" and "space" frequencies are 50 kHz and 40 kHz respectively. Note that the difference 10 kHz is equal to the integer 2 times the bit rate.

It will be obvious to one skilled in the art that other modulation techniques could be used. For example, on-off-keying (OOK) could be used whereby the variable load 230 turns the load off when a "0" is transmitted and turns the load on and off when a "1" is transmitted (or vice versa) in accordance with whether a square wave of predetermined frequency supplied by the clock 240 is high or low.

Phase-shift-keying (PSK) in either the fully-coherent (CPSK) or differentially-coherent (DCPSK) versions could also be used. Coherent phase-shift-keying would result if the variable load 230 turned the load on or off in accordance with whether the square wave described above was high or low respectively when a "0" was transmitted and turned the load on or off when the square wave was low or high respectively when a "1" was transmitted (or vice versa).

Differentially-coherent phase-shift-keying would result if the variable load 230 turned the loan on and off in the same way as it was during the previous bit period when a "0" is transmitted and in the opposite way when a "1" is transmitted.

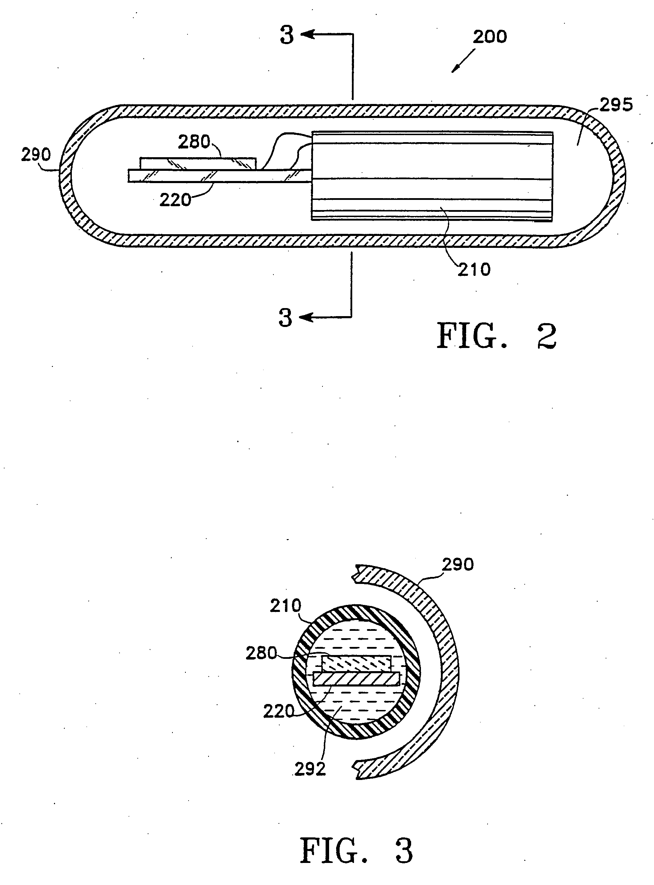

The tag circuitry for implantation-type tags is packaged to fit within a cylindrical capsule made of an inert material such as glass. A side view of the tag circuitry positioned within a cut-away view of the capsule 290 is shown in Fig. 2. A cross-sectional end view of the tag 200 is shown in Fig. 3. The capacitor 220, is formed in a substrate which serves as a support for the coil 210. The coil 210 is held immobile relative to the capacitor substrate 220 by a potting material 292 that occupies the space between the coil and the substrate. The tag circuitry other than the coil 210 and the capacitor 220 is an integrated circuit 280 affixed and electrically connected to the capacitor 220 by means of gold bumps. The tag circuitry may be cushioned within the capsule by an inert fluid 295.

In an alternative embodiment of the tag, the tag circuitry 280 and the capacitor 220 are fabricated in the same substrate thereby simplifying the assembly of the tag.

In still another embodiment of the tag, the tag circuitry 280, the capacitor 220, and the coil 210 are fabricated in the same substrate, the coil being a spirally-coiled conductor lying on the surface of the substrate.

The driving-frequency voltage across the reader coil 110 is modulated in amplitude by the variation in tag power absorption from the reader coil magnetic field that results from the variation in loading of the tag resonant circuit 210, 220 brought about by the message that the controller 245 feeds into the variable load 230. The amplitude modulation is removed from the reader coil voltage by envelope detector 145 consisting of a diode bridge and the noise extending above the modulation frequencies of interest is removed by means of the lowpass filter 150. The cut-off frequency of the lowpass filter 150 is in between the lowest driving frequency which the reader is designed to use and the highest of the "mark" and "space" frequencies. Typical driving frequencies are 400 kHz and 125 kHz. Typical "mark" and "space" frequencies for the 400 kHz driving frequency are 50 kHz and 40 kHz. Under these circumstances the cut-off frequency should be placed above 50 kHz and as far below 125 kHz as possible, so as to obtain the greatest possible attenuation of the driving frequency, without causing an attenuation greater than say 1 dB in the 50 kHz "mark" frequency.

The output signal from the lowpass filter 150 is fed through the DC canceller 155 to the analog-to-digital converter 165. The purpose of the DC canceller 155 is to remove the DC component so that the AC components can occupy the entire input range of the A/D converter 165. The DC canceller can be as simple as the circuit shown in Fig. 1 - the capacitor 158 connected through the switch 160 to ground. The switch 160 is controlled by the microprocessor 170. During the initial period of reader coil 110 excitation, the capacitor 158 remains grounded through switch 160. When the reader coil voltage approaches steady state, switch 160 is opened and the input to the A/D converter 165 is zero, since the voltage across capacitor 158 equals that out of the lowpass filter 150 and the two voltages are now connected in series opposition.

The A/D converter 165 samples the input waveform at times corresponding to the rising transitions of the 4 times "mark" frequency and the 4 times "space" frequency clocking signals supplied by the timing generator 140 thereby producing 10-bit digital representations of the input samples. The "4 times" sampling rates provide four samples during each cycle of the "mark" and "space" frequencies which simplifies subsequent processing operations.

Another embodiment of the invention is used when tags to be identified include those that transmit information by causing the phase or frequency of the reader coil voltage to vary. An example of such tags are those that respond to an interrogating reversing magnetic field with an FSK or PSK signal after the field is turned off. Such signals would not survive the envelope detector 145 and lowpass filter 150 and consequently, a different means of demodulation is required to receive these signals.

In the alternative embodiment of the invention, the envelope detector 145, the lowpass filter 150, and the DC canceller 155 are replaced by a notch filter tuned to the driving frequency of the reader coil 110 and the microprocessor 170 performs the entire signal demodulation process. By proper programming of the microprocessor, the complete gamut of amplitude, phase, and frequency modulation formats can be accommodated within the reader 100. The purpose of the notch filter is to suppress the driving frequency component of the alternating coil voltage, thereby permitting the use of an A/D converter with a smaller dynamic range.

In either embodiment, the microprocessor 170 obtains the samples digitized by the A/D converter 165 as soon as they are available and stores them in memory. The tag identification data that derives from this information together with operational information is visually displayed on alpha-numeric display 175. This same information is made available audibly to the user in the form of audio signals and/or artificial speech by means of the audio interface 180 and the speaker 185. The microprocessor exercises control over the clock generator 140, the DC canceller 155, the alpha-numeric display 175, and the audio interface 180 by means of the control bus 187. Data is exchanged between the microprocessor 170 and the clock generator 140, the A/D converter 165, the alpha-numeric display 175, and the audio interface 180 by means of the data bus 190.

An external digital computer 195 can exercise control over and exchange data with the microprocessor 170 by means of the standard RS-232 data link 197.

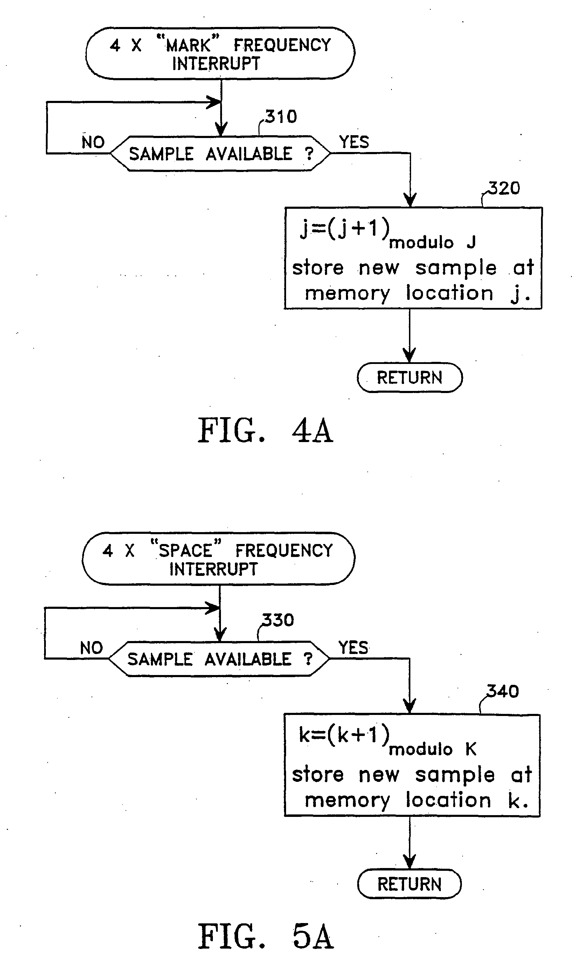

The routines for storing the A/D converter data in microprocessor memory are defined by the flow diagrams shown in Figs. 4A and 5A for the first embodiment involving the envelope detector. The routines are triggered by microprocessor interrupts that are generated by the same clocking signals that control sampling in the A/D converter 165.

The routine shown in Fig. 4A is initiated by the rising transition of the "4 x 'mark' frequency" clock signal. The microprocessor performs the "waiting" operation 310 until the digitized sample is available from the A/D converter 165 and then performs the operation 320. There are J memory cells available for sample storage in this routine where J is equal to 4*fₘ*/*R, fₘ* is the "mark" frequency, and R is the bit rate. The memory cells are identified here by the integers between 0 and (J-1). The operation 320 consists of two steps. The memory address register is incremented by 1 with a subsequent modulo J operation. Then the new sample is stored at the address contained in the memory address register where the oldest sample previously resided.

A similar routine is initiated by the rising transition of the "4 x 'space' frequency" clock signal in accordance with the flow diagram shown in Fig. 5A. The Fig. 5A routine differs from the Fig. 4A routine only in that a different memory space is involved. The Fig. 5A routine involves K memory cells where K is equal to 4*fₛ*/*R* and *fₛ* is the "space" frequency. The memory cells for this routine are identified by the integers from 0 to (K-1) .

The microprocessor is a conventional digital processor such as Motorola's 68030 or Intel's 80386 capable of operating at a clock rate between 15 and 30 MHz and capable of performing the operations that have just been described as well as those that will subsequently be described. The clock signal for the microprocessor 170 is supplied by the clock generator 140.

The samples stored in the microprocessor memory constitute a digital representation of a frequency-shift-keyed signal if the responding tag is the preferred embodiment discussed earlier. The key step in extracting the information content from the signal, i.e. the message bits, is to compute estimates of the relative probabilities that either a "mark" or "space" frequency was transmitted during a given time period. The most effective way of accomplishing this task when the received signal is contaminated with white noise is to cross-correlate the received signal with replicas of the "mark" and "space" frequency signals that would be received in the absence of noise. The cross-correlations are the desired estimates of the relative probabilities.

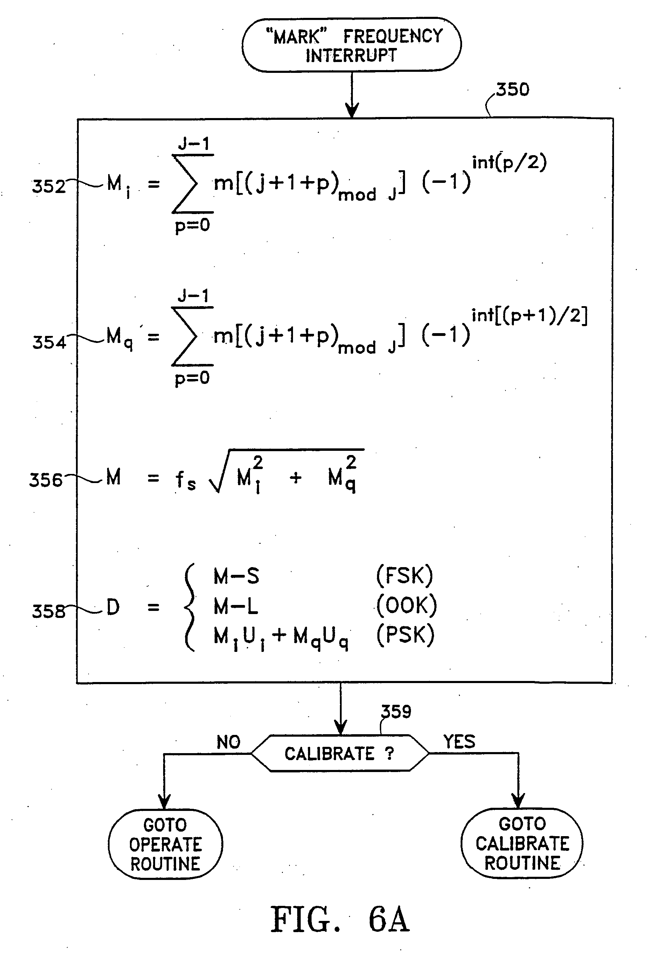

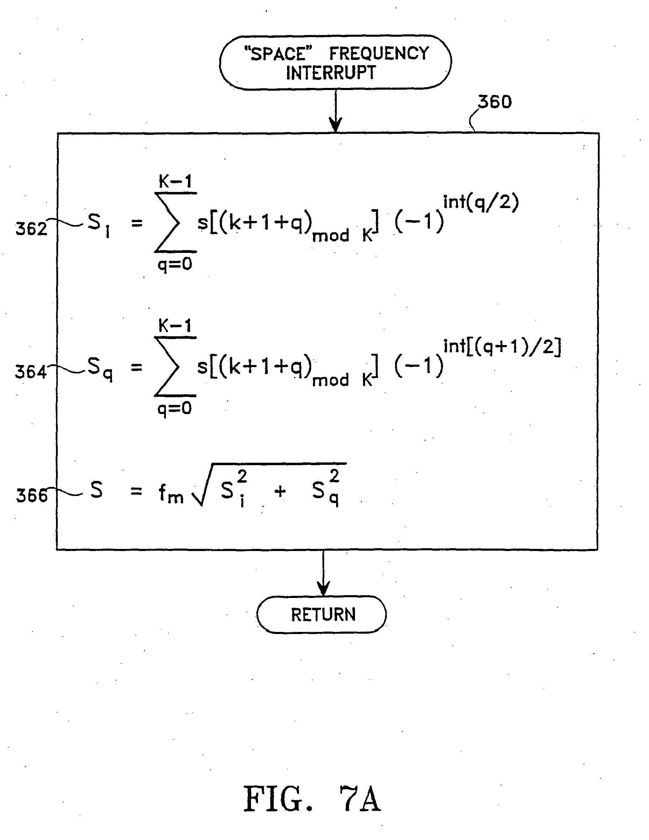

The microprocessor 170 computes cross-correlations in accordance with the interrupt routines shown in Figs. 6A and 7A. The routine shown in Fig. 6A is triggered by the rising transitions of a square-wave clock signal having a frequency equal to the "mark" frequency. The computations 350 utilize the data stored in memory as a result of the routine shown in Fig. 4A. The result of the computations 350 is an estimate of the relative probability that a "mark" frequency was transmitted during the period extending from t-1/R to t where t is the present time. To ease the computational requirements placed on the microprocessor 170, a square-wave approximation to the "mark" frequency replica is used.

Equation 352 specifies the computations required to obtain the inphase cross-correlation *Mᵢ* of the received signal with the "mark" frequency square-wave replica having a sine wave fundamental. Equation 354 specifies the computations required to obtain the quadrature cross-correlation *M_{q}* of the received signal with the "mark" frequency square-wave replica having a cosine wave fundamental. The quantity m(n) in the equations denotes the "mark" frequency received signal sample stored at memory location n. The quantity int(n) denotes the integer portion of n.

The quantity *Mᵢ*, is an estimate of the relative probability that a "sine-type" square-wave replica was received. The quantity *M_{q}* is an estimate of the relative probability that a "cosine-type" square-wave replica was received. Equation 356 specifies the computations required to obtain M, an estimate of the relative probability that a square-wave replica of any phase was received. The factor *fₛ* is for normalizing purposes and will be discussed further in connection with the routine shown in Fig. 7A. The quantity D defined by equation 358 will be discussed in connection with the discussion of Fig. 7A that follows.

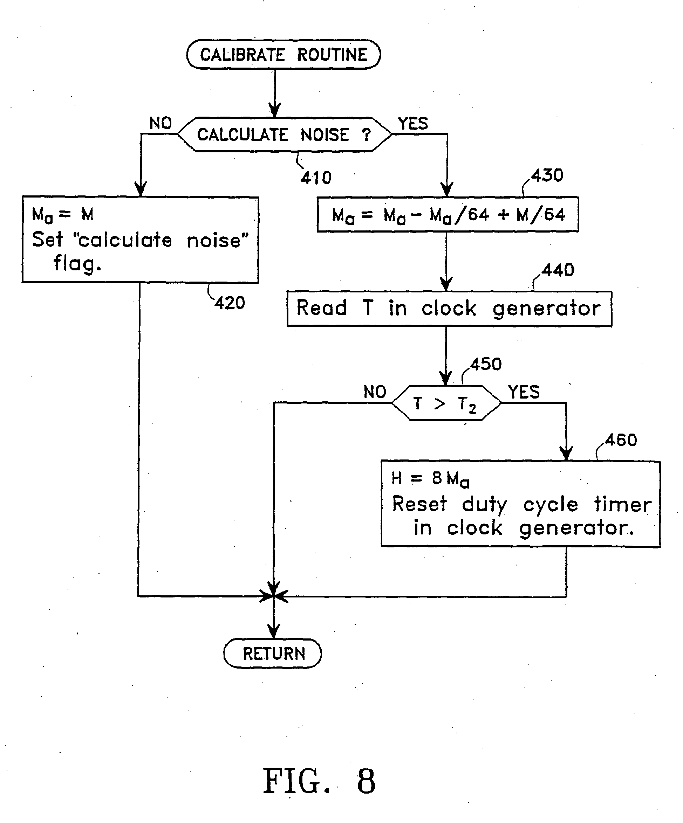

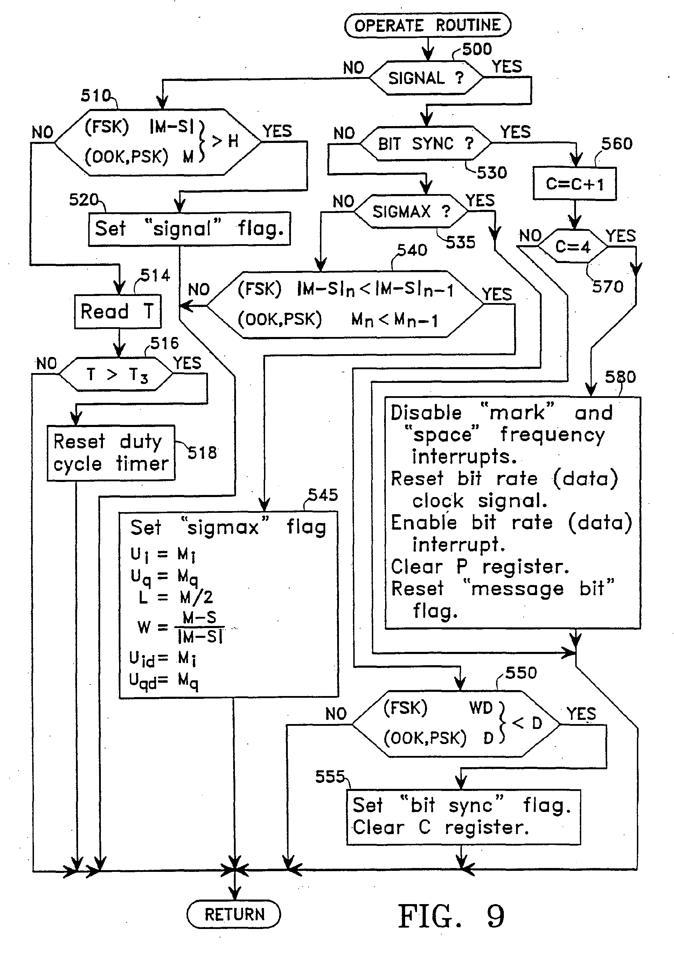

Following the computations 350, a determination 359 is made as to whether the "calibrate" flag has been set as a result of the user of the equipment pushing the momentary "calibrate" switch 144 (Fig. 1). If it has been set, the calibrate routine is performed. Otherwise, the operate routine is executed. These two routines will be discussed a little later in connection with Figs. 8 and 9.

The microprocessor 170 computes the cross-correlations of the received signal with the "space" frequency replicas by means of the routine shown in Fig. 7A. The routine is triggered by the rising transitions of a square-wave clock signal having a frequency equal to the "space" frequency. The computations 360 result in an estimate of the relative probability that a "space" frequency was transmitted during the period extending from t-l/R to t. Just like the "mark" frequency cross-correlations, a square-wave approximation to the "space" frequency replica is used.

The quantities *Sᵢ*, *S_{q},* and S defined by equations 362, 364, and 366 respectively correspond to the similarly defined quantities of Fig. 6A with the "space" frequency replica substituted for the "mark" frequency replica. The quantity s(n) denotes the "space" frequency received signal sample stored at memory location n. The quantity *Sᵢ* is an estimate of the relative probability that a "sine-type" square-wave replica having a frequency equal to the "space" frequency was received. The quantity *S_{q}* is an estimate of the relative probability that a "cosine-type" square-wave replica was received. The quantity S is an estimate of the relative probability that a square-wave replica of any phase was received. In those cases where the rising transitions of the "mark" and space" frequency clocking signals coincide, the routine shown in Fig. 7A is performed first since the computed "S" data is required to perform some of the computations shown in Fig. 6A.

A "mark" frequency cross-correlation involves 4*fₘ*/*R* received signal samples while a "space" frequency cross-correlation involves 4*fₛ*/*R* samples. In order to place the relative probabilities represented by M and S on the same scale, the factors *fₛ* and *fₘ* are incorporated in the equations 356 and 366 of Figs. 6A and 7A. Both quantities thereby appear to be based on the same number of received signal samples - 4*fₘfₛ*/*R.*

A convenient quantity for assessing the probability that a "mark" frequency rather than a "space" frequency was received is D =M-S, the frequency-shift-keying (FSK) version of equation 358 in Fig. 6A. If D is greater than zero, the relative probabilities M and S favor the conclusion that the "mark" frequency rather than the "space" frequency was received. If D is less than zero, the relative probabilities favor the opposite conclusion.

The reader 100 can also be configured to read tags that utilize on-off-keying (OOK) or phase-shift-keying (PSK). The "space" frequency interrupt is disabled when tags using these two modulation techniques are being read since the information is carried by a single frequency (which, for convenience, will be referred to as the "mark" frequency). The appropriate expressions for D are labeled "OOK" and "PSK" in equation 358 of Fig. 6A. The quantity L is ideally equal to half the value of M in the absence of noise. The quantities Uᵢ and *U_{q}* are respectively the inphase and quadrature components Mᵢ and *M_{q}* for some representative bit period. Their use in the equation for D results in a positive D when the signal received during a bit period has the same phase as the signal received during the representative bit period. A negative D results when the signal received during a bit period has the phase opposite to that of the signal received during the representative bit period.

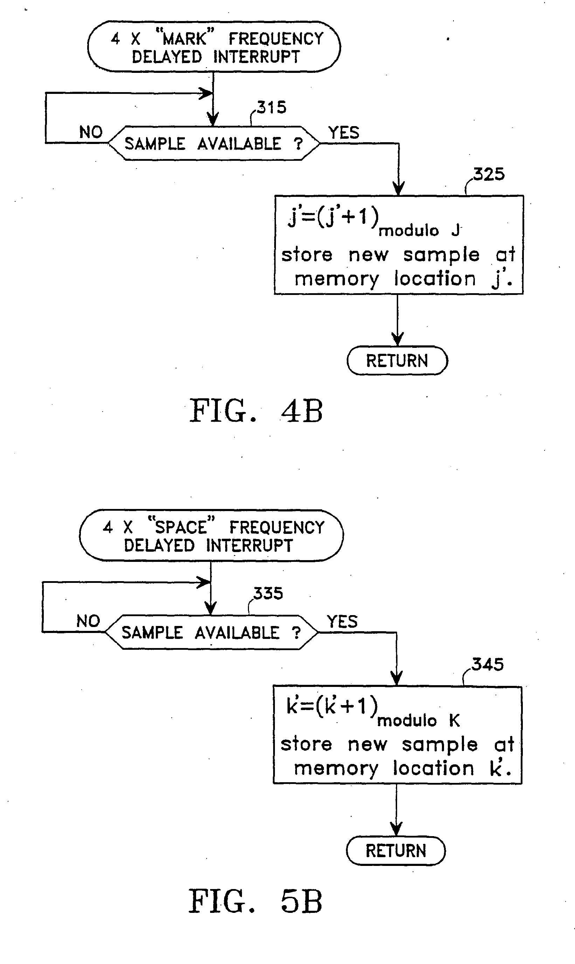

In the alternative embodiment of the demodulation process (which substitutes a notch filter for the envelope detector 145, lowpass filter 150, and DC canceller of Fig. 1), the received waveform is most conveniently represented by complex-valued samples where each sample value consists of a real part and an imaginary part. The real sample values are obtained as previously described in connection with Figs. 4A and 5A. The imaginary sample values are obtained by sampling the received waveform one-quarter cycle of the driving frequency after the real sample values are obtained. The imaginary sample values are stored in separate memory spaces as detailed in Figs. 4B and 5B. The routines shown in Figs. 4B and 5B are identical to those shown in Figs. 4A and 5A except that they involve different memory spaces.

The cross-correlation process that is used to extract the information content from the received signal is somewhat more complicated when the received signal and the replicas of the possible received signals are represented by complex values. The quantities of interest are the cross-correlations of the complex signal and the complex conjugates of the replicas.

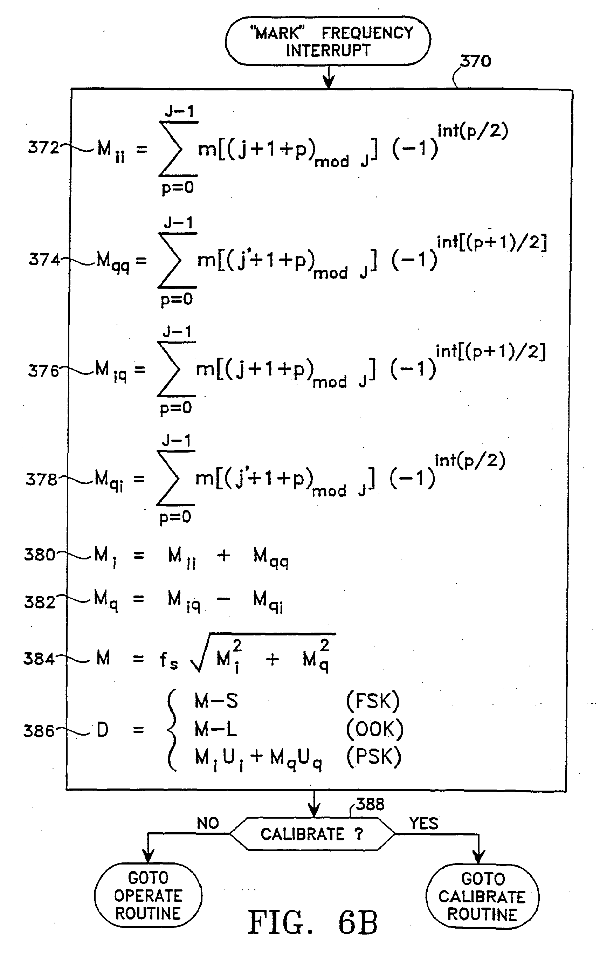

The process is defined in Fig. 6B for a "mark" frequency replica correlation. The computations 370 utilize the data stored in the j and j' memory spaces as a result of the routines shown in Figs. 4A and 4B.

Equation 372 defines the cross-correlation of the real part of the received signal with the real part of the "mark" frequency square-wave replica. The real part of the "mark" frequency squarewave replica is a square wave having a sine wave fundamental.

Equation 374 defines the cross-correlation of the imaginary part of the received signal with the imaginary part of the "mark" frequency square-wave replica. The imaginary part of the "mark" frequency square-wave replica is a square wave having a cosine fundamental.

Equation 376 defines the cross-correlation of the real part of the received signal with the imaginary part of the "mark" frequency square-wave replica.

Equation 378 defines the cross-correlation of the imaginary part of the received signal with the real part of the "mark" frequency square-wave replica.

Equation 380 defines the real part of the cross-correlation of the complex signal with the complex conjugate of the "mark" frequency square-wave replica.

Equation 382 defines the imaginary part of the cross-correlation of the complex signal with the complex conjugate of the "mark" frequency square-wave replica.

Equations 384 and 386 are the same as equations 356 and 358 respectively of Fig. 6A. The remaining portion of the Fig. 6B routine is the same as the corresponding portion of the Fig. 6A routine.

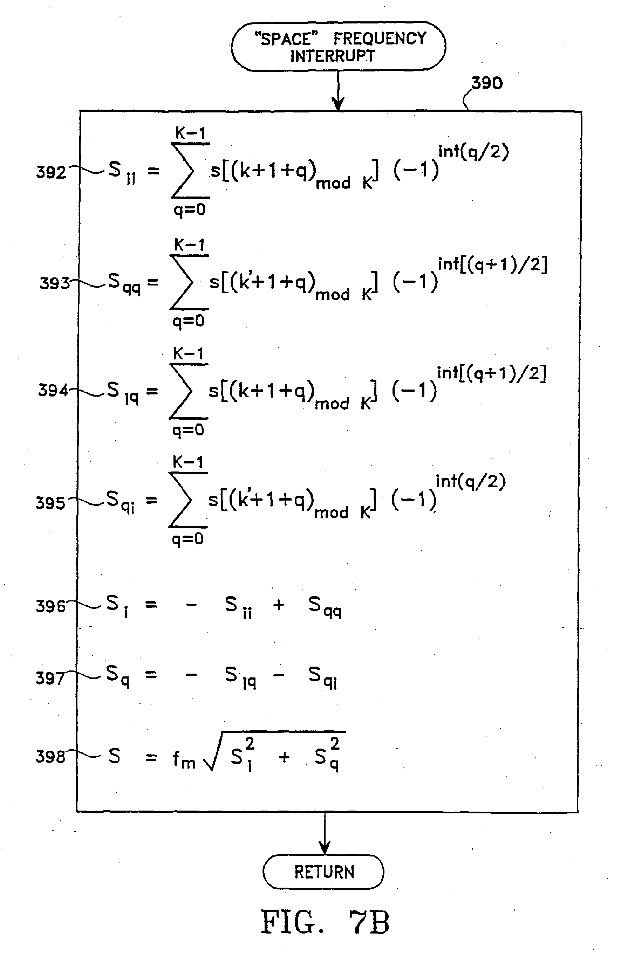

The microprocessor 170 computes the complex cross-correlation of the complex received signal with the complex "space" frequency replica in accordance with equations 390 given in Fig. 7B. The computations 390 utilize the data stored in the k and k' memory spaces as a result of the routines shown in Figs. 5A and 5B.

Equation 392 defines the cross-correlation of the real part of the received signal with the real part of the "space" frequency square-wave replica. The real part of the "space" frequency square-wave replica is a square wave having a sine wave fundamental.

Equation 393 defines the cross-correlation of the imaginary part of the received signal with the imaginary part of the "space" frequency square-wave replica. The imaginary part of the "space" frequency square-wave replica is a square wave having a cosine fundamental.

Equation 394 defines the cross-correlation of the real part of the received signal with the imaginary part of the "space" frequency square-wave replica.

Equation 395 defines the cross-correlation of the imaginary part of the received signal with the real part of the "space" frequency square-wave replica.

Equation 396 defines the real part of the cross-correlation of the complex signal with the complex conjugate of the "space" frequency square-wave replica.

Equation 397 defines the imaginary part of the cross-correlation of the complex signal with the complex conjugate of the "space" frequency square-wave replica.

Equation 398 is the same as equation 366 of Fig. 7A.

The Calibrate Routine shown in Fig. 8 establishes what the noise threshold of the reader receiving circuitry is and sets an appropriate threshold for deciding whether a signal from the tag is being received. This routine is performed by the microprocessor 170 at the conclusion of the "Mark" Frequency Interrupt Routine if the operator of the equipment has pressed the momentary "calibrate" switch 144 (Fig. 1) thereby causing the microprocessor to set the "calibrate" flag. Normally, the operator would calibrate the equipment each day prior to use or when changing locations of use.

The microprocessor performs test 410 to see if the "calculate noise" flag has been set. This flag is reset when power to the reader 100 is turned on and each time the duty cycle timer is reset. Thus, the first time through the calibrate routine the microprocessor performs operation 420 consisting of entering M into the *Mₐ* register and setting the "calculate noise" flag. On subsequent passages through the calibrate routine, the microprocessor performs the operation 430 which after many repetitions results in an *Mₐ* that is a smoothed version of M. The factor 64 establishes the time period over which the M data is smoothed and the degree of smoothing. The aim here is to obtain an estimate of the average value of the noise amplitude that is within say 5% of the actual average value.

The microprocessor next performs the operation 440 consisting of reading the time T maintained by the clock generator 140. If the microprocessor finds by test 450 that T is greater than *T*₂, the time required to achieve the desired amount of smoothing, operation 460 is performed. The received signal detection threshold H is set at some multiple of the noise level *Mₐ*. The factor 8 that appears in the equation for H limits the false signal detections to a reasonably low number while maintaining the probability of detection at a reasonably high value.

The duty cycle timer in the clock generator 140 is then reset which causes all flags to be reset including the "calibrate" flag and the "calculate noise" flag. The "calibrate" flag is reset so as to signal the microprocessor 170 at the next "mark" frequency interrupt that the Operate Routine should be performed (see Fig. 6, operation 359).

The specific numbers shown at 430 and 460 correspond to the particular embodiment of the invention described herein. Other numbers, if chosen with regard to the guidelines given above, could also achieve the purposes of the invention.

To achieve the greatest possible accuracy in extracting the message bits from the received signal, the cross-correlation of received signal and replica must involve signal samples from only one bit period. The Operate Routine shown in Fig. 9 enables the microprocessor 170 to recognize the presence of a tag signal and to synchronize the receiving operations to the bit timing established by the tag.

A "signal" flag denotes the presence of a signal from a tag. The "signal" flag is reset each time the duty cycle timer signal in the clock generator 140 goes low. Thus, the microprocessor 170 in performing the test 500 in Fig. 9 finds that the signal flag is down and performs test 510. If the microprocessor determines by test 500 that the absolute value of M-S (FSK) or M (OOK or PSK)does not exceed the detection threshold H, it concludes that a signal is not present and performs the operation 514 of reading T and the test 516 of comparing T with a predetermined time *T*₃. If T is greater than *T*₃, the search for a tag at the particular location of the reader coil has taken longer than it should if a tag were present at that location and the search is aborted by performing the operation 518. If the test 510 reveals the presence of a signal (and a tag), the operation 520 of setting the "signal" flag is performed.

On the next interrupt after the "signal" flag is set, the microprocessor recognizes by the test 500 that the "Signal" flag is set and performs the test 530. The "bit sync" flag was also reset when the duty cycle timer signal went low and the microprocessor proceeds to test 535. The "sigmax" flag was also reset when the duty cycle timer signal went low and the microprocessor proceeds to test 540.

Signal detection is likely to occur when the cross-correlation intervals are not properly aligned with the received bit periods. The correlation of the received signal with the replica(s) should increase with each successive interrupt as the correlation interval moves into alignment with the received bit period and then the correlation should start to decrease as the correlation interval moves out of alignment. The microprocessor, by means of test 540, determines when bit alignment (or bit synchronization) occurs by testing for a decrease in correlation. When the just-measured absolute value of M-S (denoted by the subscript n) is less than the previously-measured value (FSK) (denoted by the subscript n-1) or when the just-measured value of M is less than the previously-measured value (OOK or PSK), the microprocessor proceeds to operation 545 and sets the "sigmax" flag. The constants *Uᵢ*, *U_{q},* and L (see Fig. 6, equation 358) are given values and the quantity W is calculated. The quantities *U_{id}* and *U_{qd}* are given initial values.

At the next "mark" frequency interrupt, the microprocessor passes through test 500, 530, and 535 and arrives at operation 550. For an FSK signal the quantity WD will be positive. For either an OOK or PSK signal, the quantity D will be positive. As the operation is repeated during future traversals through this interrupt routine, the quantities will eventually go negative. The interrupt when this occurs marks the timing situation when the cross-correlation periods include half of one bit and half of the following bit. This occurrence is marked by performing the operation 555 of setting the "bit sync" flag. The C register is also cleared for reasons that will become obvious when operation 560 and subsequent operations are discussed.

At the next "mark" frequency interrupt, the microprocessor passes through tests 500 and 530 and performs the operation 560 of incrementing the C register which was cleared when operation 555 was performed. The microprocessor then performs the operation 570 of testing the value of C.

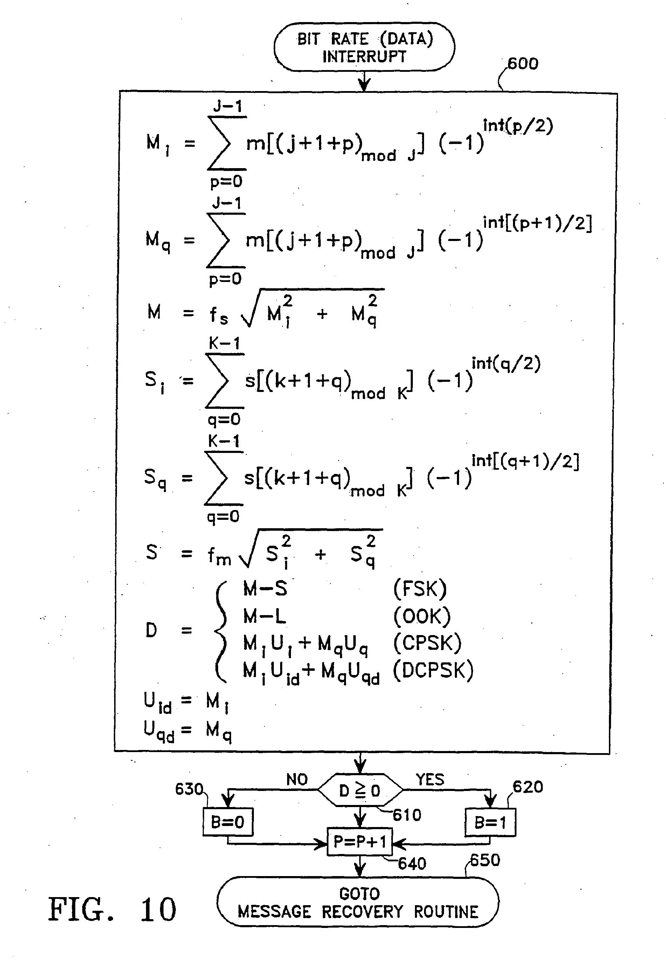

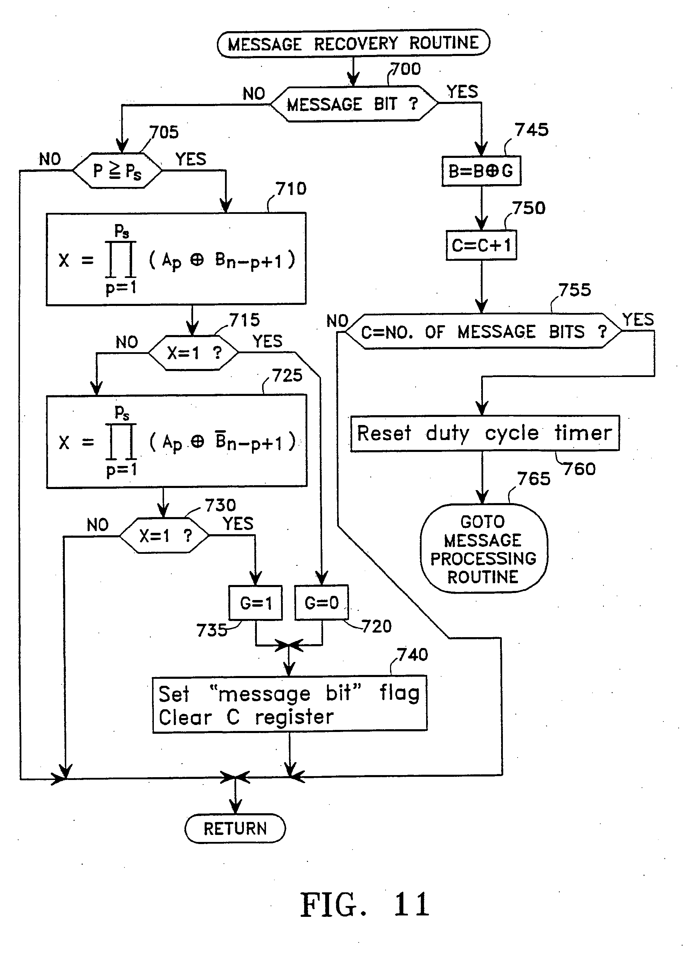

The "bit sync" flag was set when the cross-correlation intervals were extending approximately from the middle of one bit period to the middle of the next. The cross-correlation intervals advance by 0.02 ms with each "mark" frequency interrupt ("mark" frequency = 50 kHz). After 5 interrupts the cross-correlation intervals will have advanced by one-half of a bit period and will be approximately aligned with the bit periods. Thus, when C reaches 4, the next "mark" frequency interrupt will mark the time when substantially all of the accumulated signal samples correspond to one bit period. The microprocessor then performs operation 580 consisting of disabling the "mark" and "space" frequency interrupts, resetting the bit rate (data) clock signal in the clock 140 so that its next positive transition will coincide with the next positive transition of the "mark" frequency clock signal, and enabling the bit rate (data) interrupt. The P register, which is used in the Bit Rate (Data) Interrupt Routine shown in Fig. 10, is cleared. The "message bit" flag used in the Message Recovery Routine shown in Fig. 11 is reset. The reader is now ready to read out the data transmitted by the tag.

The bit identification process corresponding to the reader configuration shown in Fig. 1 is shown in Fig. 10. It is triggered by an interrupt generated by the bit rate (data) clock signal that was previously synchronized to the incoming signal. The required computations 600 are the same as the computations 350 and 360 discussed previously in connection with Figs. 6 and 7 except that the quantities *U_{id}* and *U_{qd}*, the previously-measured *Mᵢ* and *M_{q},* provide the phase reference in obtaining D for differentially-coherent phase-shift-keying (DPSK).

If the microprocessor determines by test 610 that D is greater than or equal to zero, it performs the operation 620 identifying the received bit B as a "1". If the microprocessor finds that D is less than zero, it identifies the bit as a "0". All received bits are saved in memory for subsequent processing.

The operation 640 increments the P register thereby maintaining a count of the number of bits received after bit synchronization occurred.

The final operation 650 causes the microprocessor to go to the Message Recovery Routine shown in Fig. 11.

The bit identification process corresponding to the embodiment of the reader that substitutes a notch filter for the envelope detector 145, the lowpass filter 150, and the DC canceller 155 is the process shown in Fig. 10 and discussed above except that the equations of Figs. 6B and 7B are used instead of those of Figs. 6A and 7A.

Recovery of the message proceeds according to the flow diagram shown in Fig. 11. The microprocessor 170 first performs test 700 and since the "message bit" flag was reset in operation 580 of the Operate Routine shown in Fig. 9, it proceeds to test 705 to see if the number of bits accumulated is sufficient for processing. The number of bits required to establish the start of a message is denoted by the symbol *Pₛ*. If the count P equals *Pₛ,* the operation 710 is performed which establishes whether the *P*ₛ bits thus far accumulated constitute a "start message" code. The symbols used in the equation of operation 710 have the following meanings. The sequence of "0's" and "1's" that constitutes the "start message" code and precedes the first message bit is represented (in reverse order of transmission) by *Aₚ* where p takes on the values from 1 to *Pₛ*. The most recently acquired bit is denoted by *Bₙ*. The bit acquired m bit periods previously is denoted by Bₙ₋ₘ. The plus signs denote modulo 2 additions. The product sign indicates that the quantities in parentheses are to be AND'ed together. If X equals 1, the bits thus far accumulated constitute the "start message" code. The quantity G is set equal to 0 during operation 720 signifying that the received bits have been properly recognized as "0's" and "1's".

If X does not equal 1, it may be because the "0's" and "1's" in the received bit sequence have been interchanged (since there may be a phase ambiguity of π radians). To check this possibility, operation 725 is performed which is the same as operation 710 except that the received bits are inverted, as denoted by the bars over the Bₙ₋ₘ. Test 730 is performed on the new X and if it is equal to 1, the "start message" code has been received but the received bits are inverted. The operation 735 of setting G equal to 1 is performed signifying that the received bits are inverted. If either of the tests 715 and 730 are successful, the operation 740 is performed which sets the "message bit" flag and clears the C register.

If neither of the tests 715 and 730 are successful, the interrupt routine ends. During the next interrupt, the oldest bit is discarded, the new bit is added, and the same tests are repeated. This process continues, interrupt by interrupt until the "start message" code is recognized. If the start message is not recognized within a predetermined time period following detection of a signal, the reader magnetic field may be turned off to save battery energy.

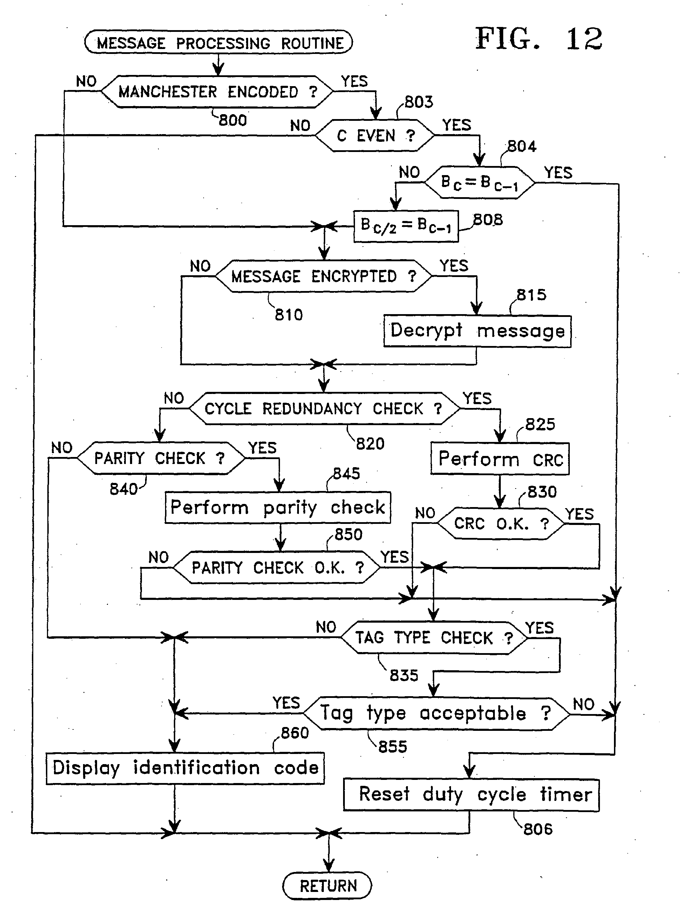

Interrupts subsequent to the recognition of the "start message" code proceed through test 700 to operation 745 where incorrect inversions of the data are corrected by adding modulo 2 the quantities B and G. The received message bits are counted in operation 750 by incrementing the C register. When test 755 shows that the proper number of message bits have been received, the duty cycle timer is reset by operation 760 thereby removing the voltage from the reader coil 110. The microprocessor is then instructed in operation 765 to go to the Message Processing Routine shown in Fig. 12.

The reader 100 may be instructed to look for one type of tag or for a variety of tags by means of "mode" data stored in read-only memory in the form of an integrated circuit, a resistor matrix, or any other means for permanently storing binary data. Mode data include driving frequency, type of modulation (i.e. FSK, OOK, CPSK, and DCPSK), "mark" and "space" frequencies, bit rate, data encoding if any (e.g. Manchester or related coding techniques), "start message" code, error detection process (e.g. cyclic redundancy checks, parity checks), tag type, and all of the constants that are incorporated into the firmware that controls the operations of the reader.

The Message Processing Routine shown in Fig 12 is of rather limited scope simply because the variety of tags presently in use is rather limited. As new and improved tag designs make their appearance, the firmware as represented by this flow diagram can be expanded or modified to include these , new and unique features as they make their appearance. Thus, this flow diagram should be recognized as exemplary of the possibilities rather than a full and complete exposition of the capabilities of the invention.

The microprocessor 170 performs test 800 by determining from the mode data whether the data is Manchester encoded. If it is, test 803 is performed. If the number of message bits received C is even, the just-received bit *B_{c}* is compared with the previously-received bit B_{c-1}, in operation 804. In Manchester coding, the two bits have to be different. If they are the same, an error in transmission has occurred and the current "read" cycle is terminated by the operation 806 of resetting the duty cycle timer in the clock generator 140. If the bits are not the same, operation 808 is performed designating the (C-1)'th bit as the C/2'th bit of the message.

Test 810 is accomplished by determining from the mode data whether the message is encrypted. If it is, the mode data contains the information necessary to decrypt the message during operation 815. Mode data will also indicate for the purposes of tests 820 and 840 whether either cyclic redundancy checks or parity checks are to be made. The required data for making these checks during operations 825 and 845 is also provided in the mode data.

If the cyclic redundancy check or the parity check is incorrect, test 830 or test 850 respectively causes the current "read" cycle to end by operation 806. If the checks are satisfactory, the microprocessor proceeds to test 835 and determines by consulting the mode data whether the tag type is included in the message. If it is, the determination is made in test 855 as to whether the tag type is among those authorized to be read. If it is not, the present "read" cycle is aborted through operation 806. In another embodiment, the reader would be optionally empowered to display an "unauthorized tag detected" message.

The final operation of the routine is 860 which results in the display of the identification code for the tag on the liquid crystal display 175. Two "beeps" of a tone are also caused to issue from the speaker 185.

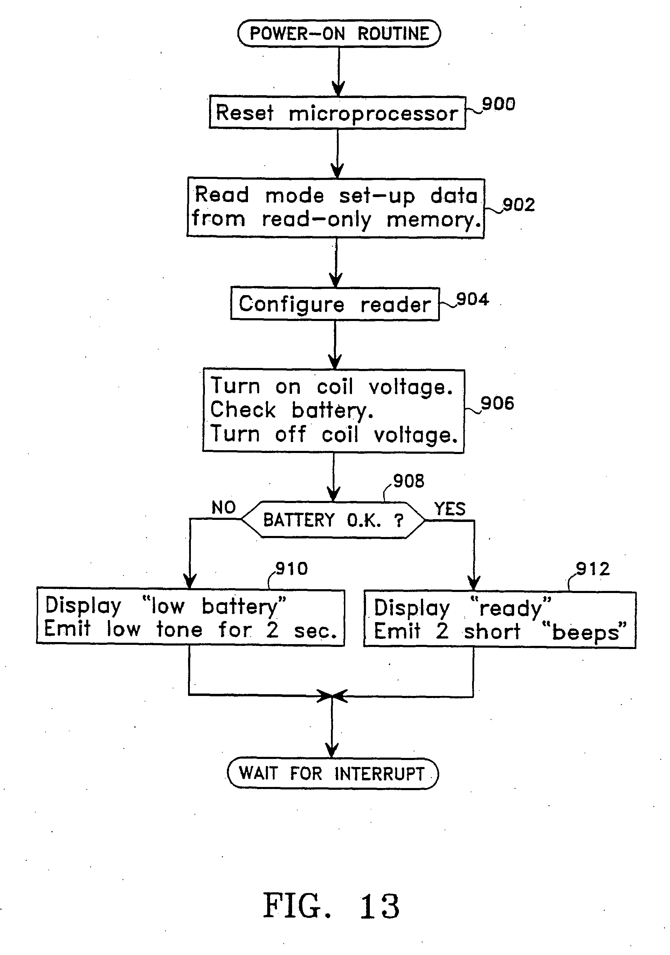

The routine executed by the microprocessor when the reader power switch is actuated by the user is shown in Fig. 13. Operation 900 resets the microprocessor 170 and causes it to perform an initialization procedure. The microprocessor, during operation 902, obtains all necessary mode data from the mode data read-only memory necessary to configure the reader 170 to read the tags it is authorized to read. The reader 170 is configured during operation 904.

The coil 110 is energized during operation 906 and the battery voltage is compared under load with a reference voltage. After the comparison is made, the coil voltage is turned off. If the voltage level is found to be low during test 908, operation 910 causes a "low voltage" message and is displayed on liquid crystal display 175 and a low audible tone is caused to be emitted by the speaker 185 for one second. If the voltage level is acceptable, the operation 912 causes the message "ready" to be displayed and two short "beeps" to be emitted. The microprocessor then enters a dormant stage where it waits for interrupts that cause it to perform additional processing operations.

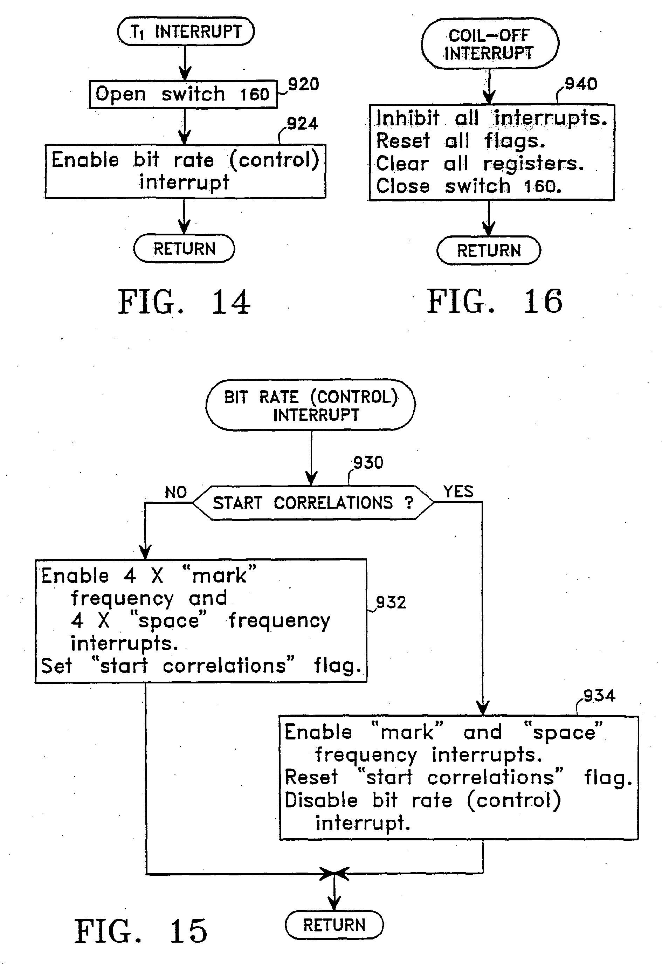

The *T*₁ Interrupt Routine is shown in Fig. 14. The *T*₁ interrupt is produced by the T counter in the clock generator 140 when the coil voltage has reached a near steady-state condition after having been turned on. Operation 920 results in the opening of switch 160 in the DC canceller 155. The bit rate (control) interrupt is enabled by operation 924 thereby permitting the actual "read" process to begin.

The Bit Rate (Control) Interrupt Routine is shown in Fig. 15. Test 930 reveals that the "start correlations" flag has not been set and operation 932 consisting of enabling the 4 times "mark" frequency and the 4 times "space" frequency interrupts and setting the "start correlations" flag. At, the next bit rate (control) interrupt, the microprocessor proceeds through test 930 to operation 934 and thereby enables the "mark" frequency and the "space" frequency interrupts, the latter only if the mode data indicates that the responding tag utilizes FSK modulation. The start correlations" flag is reset in anticipation of the next read" cycle and the bit rate (control) interrupt is inhibited.

The Coil-Off Interrupt Routine is shown in Fig 16. The coil-off interrupt is generated when the signal from the duty cycle timer in the clock generator 140 goes low and turns off the coil voltage. When this interrupt occurs, the microprocessor inhibits all interrupts, resets all flags, clears all registers, and closes switch 160.

The use of the multi-mode identification system begins with the selection of a particular physical design for the tags that are suitable for attachment to or implantation in the objects of interest. Tags are manufactured in the number required and a sequence of bits including a unique identification code is programmed into the non-volatile memory of each tag. The tags are attached to or implanted in the objects of interest as the need arises.

The identification process consists of switching on the power to the reader, optionally calibrating the instrument in terms of noise level by pressing the "calibrate" switch and pulling the read" trigger. The device is now ready to read tags.

The user pulls the "read" trigger and moves the reader over the surface of the object near where the tag, if present, would reside. If a tag is present and the tag is of the type authorized to be read, the identification code associated with the object is displayed and audibly indicated.

The description of the preferred embodiment of the multi-mode identification system reflects the choice of particular design options and design parameter values. It will be evident to one skilled in the art that other choices are possible and may even be desirable for certain applications and will similarly permit the achievement of the purposes of the invention. It is intended that the invention be limited only by the claims and not by the more limited concept represented by the preferred embodiment.

## Claims

1. An electronic identification reader (100) capable of operating in a plurality of modes, said modes being **characterized by** mode control data, said reader (100) comprising:
a means (110) for generating a reversing magnetic field (10);
a means (142) for starting said generating means (110);
a means (170) for stopping said generating means (110);
a means (170) for obtaining a measure of the time-dependent absorption of power from said magnetic field (10) by an electronic identification tag (200), said power absorption measure representing information being communicated by said tag (200); and
a means (170) for extracting said information from said power absorption measure, said information extracting means (170) being capable of operating in a plurality of information extracting modes, each of said information extracting modes being based on a specific functional relationship between said information and said time-dependent absorption of power by said tag (200), said information extracting modes being **characterized by** said mode control data.

2. An electronic identification reader (100) capable of operating in a plurality of modes, said modes being **characterized by** mode control data, said reader (100) comprising:
a means (110) for generating a reversing magnetic field (10);
a means (142) for starting said generating means (110);
a means (170) for stopping said generating means (110);
a means (170) for obtaining a measure of magnetic field variations brought about by an electronic identification tag (200) either before or after said generating means is stopped, said magnetic field variation measure representing information being communicated by said tag (200); and
a means (170) for extracting said information from said magnetic field variation measure, said information extracting means (170) being capable of operating in a plurality of information extracting modes, each of said information extracting modes being based on a specific functional relationship between said information and said time-dependent magnetic field variation brought about by said tag (200), said information extracting modes being **characterized by** said mode control data.

3. The electronic identification reader (100) of claim 1 or 2, **characterized in that** it is coupled with at least one tag (200), each tag (200) comprising:
a means (255) for storing information to be communicated to an electronic identification reader (100);
a means (230) for varying the absorption of power from a reversing magnetic field (10) in accordance with said stored information.

4. The electronic identification reader (100) of claim 1 or 2, **characterized in that** it is coupled with at least one tag (200), each tag (200) comprising:
a means (250) for delaying said variation in absorption of power for a period of time to allow a transient voltage associated with starting the generation of said reversing magnetic field (10) to decrease to a level where said varying absorption of power from said reversing magnetic field (10) is distinguishable from said transient voltage.

5. The electronic identification reader (100) of claim 1 or 2, **characterized in that** it is coupled with at least one tag (200), each tag (200) comprising:
a coil (210), a capacitor (220), a variable load (230), an AC-to-DC voltage converter (235), and a signal generator (240).

6. The electronic identification reader (100) of claim 1 or 2, **characterized in that** it is coupled with at least one tag (200), each tag (200) comprising:
a means (255) for storing information to be communicated to an electronic identification reader (100);
a means (230) for varying the absorption of power from a reversing magnetic field (10) in accordance with said stored information, the generation of said magnetic field (10) being started at some arbitrary time, said magnetic field (10) being zero prior to said arbitrary time and consisting of a steady-state component and a transient component subsequent to said arbitrary time;
a means (250) for delaying said variation in absorption of power for a predetermined period of time, said delay time being the time required for said transient associated with starting the generation of said reversing magnetic field (10) to decrease to a level where said varying absorption of power from said reversing magnetic field (10) is distinguishable from said transient.

7. The electronic identification reader (100) of claim 1 or 2, **characterized in that** it is coupled with at least one tag (200), each tag (200) comprising:
a coil (210), a capacitor (220), a variable load (230), an AC-to-DC voltage converter (235), a delay means (250), and a signal generator (240); said coil (210) and capacitor (220) having first and second connecting terminals, said variable load (230), voltage converter (235), and delay means (250) having first, second, and third connecting terminals, and said signal generator (240) having first, second, third, and fourth connecting terminals; first terminals of all said devices being connected together, said second terminals of said coil (210), capacitor (220), variable load (230), and voltage converter (235) being connected together, said third terminal of said voltage converter (235) being connected to said second terminals of said delay means (250) and said signal generator (240), said third terminal of delay means (250) being connected to said third terminal of said signal generator (240), and said fourth terminal of said signal generator (240) being connected to said third terminal of said variable load (230); said coil (210) and capacitor (220) being resonant at a predetermined frequency, said coil (210) producing an AC voltage across its terminals in response to an AC magnetic field encircled by said coil (210), said voltage converter (235) producing a DC voltage in response to said AC voltage impressed across its terminals, said DC voltage causing said delay means (250) to provide a "start" signal after a predetermined delay to said signal generator (240), said DC voltage in conjunction with said "start" signal causing said signal generator (240) to supply a signal to said variable load (230), said signal generator (240) signal being uniquely related to said tag information, the magnitude of said variable load (230) being varied in accordance with the magnitude of said signal supplied by said signal generator (240), the absorption of power by said variable load (230) from said reversing magnetic field (10) being in proportion to said magnitude of said variable load (230).

8. A method of receiving information that is communicated by the varying absorption of power from a reversing magnetic field (10) by a source of uncertain location, said varying absorption of power being functionally related to the information being communicated, said functional relationship being any one of a plurality of functional relationships, said method comprising the steps of:
generating a reversing magnetic field (10) in a region believed to be the location of said communication source;
waiting for a predetermined time period, said predetermined time period being the time required for the transient associated with turning on said reversing magnetic field (10) to decrease to a level where said varying absorption of power from said reversing magnetic field (10) is distinguishable from said transient;
obtaining a measure of the power absorbed, if any, from said reversing magnetic field (10) as a function of time;
utilizing the plurality of said functional relationships that may exist between said varying absorbed power and said information being communicated to determine from said power absorption measure as a function of time whether information is being communicated, and if so, the functional relationship being employed;
omitting remaining steps and repeating method in a different location if information is not being communicated; otherwise,
extracting information from said power absorption measure as a function of time utilizing said functional relationship being employed.

9. A method of receiving information that is communicated by the varying of a magnetic field (10) by a source of uncertain location, said variation in magnetic field (10) being functionally related to the information being communicated, said functional relationship being any one of a plurality of functional relationships,
said method comprising the steps of:
generating a reversing magnetic field (10) in a region believed to be the location of said communication source;
waiting for a predetermined time period, said predetermined time period being the time required for the transient associated with turning on said reversing magnetic field (10) to decrease to a level where said magnetic field variation is distinguishable from said transient;
obtaining a measure of the magnetic field variation as a function of time;
utilizing the plurality of said functional relationships that may exist between said magnetic field variation and said information being communicated to determine from said magnetic field variation measure as a function of time whether information is being communicated, and if so, the functional relationship being employed;
omitting remaining steps and repeating method in a different location if information is not being communicated; otherwise,
extracting information from said magnetic field variation measure as a function of time utilizing said functional relationship being employed.

10. A method of receiving information that is communicated by the varying of a magnetic field (10) by a source of uncertain location, said variation in magnetic field (10) being functionally related to the information being communicated, said functional relationship being any one of a plurality of functional relationships, said method comprising the steps of:
generating a reversing magnetic field (10) in a region believed to be the location of said communication source for a first predetermined period of time;
waiting for a second predetermined time period after said magnetic field generation stops, said second predetermined time period being the time required for the transient associated with turning off said reversing magnetic field (10) to decrease to a level where said magnetic field variation is distinguishable from said transient;
obtaining a measure of the magnetic field variation as a function of time;
utilizing the plurality of said functional relationships that may exist between said magnetic field variation and said information being communicated to determine from said magnetic field variation measure as a function of time whether information is being communicated, and if so, the functional relationship being employed;
omitting remaining steps and repeating method in a different location if information is not being communicated; otherwise,
extracting information from said magnetic field variation measure as a function of time utilizing said functional relationship being employed.
